# EUROPÄISCHE PATENTSCHRIFT

(11) **EP 2 565 614 B1**
(45) Veröffentlichungstag und Bekanntmachung des Hinweises auf die Patenterteilung: **10.04.2019**
(21) Anmeldenummer: 12179496.0
(22) Anmeldetag: 07.08.2012
(51) Int. Cl.: G01N 1/06

(54) **Rotationsmikrotom**
Rotation microtome
Microtome à rotation

(30) Priorität: 05.09.2011 DE 102011112287; 17.09.2011 DE 102011112450
(43) Veröffentlichungstag der Anmeldung: 06.03.2013
(73) Patentinhaber: PFM Medical AG, 50996 Köln (DE)
(72) Erfinder: Schneider, Erwin, 69226 Nußloch (DE); Kraus, Steffen, 69207 Sandhausen (DE)
(74) Vertreter: Patent- und Rechtsanwälte Ullrich & Naumann

(56) Entgegenhaltungen:
- EP-A2- 2 141 478
- DE-A1-102007 026 843
- DE-B4-102007 026 844
- US-A- 4 760 989
- US-A- 5 065 657
- US-A- 5 171 032
- US-A- 5 881 626

## Beschreibung

Die Erfindung betrifft ein Rotationsmikrotom mit einem Mikrometerwerk, einer dem Mikrometerwerk zugeordneten Objekthalteeinrichtung, einem Antrieb für das Mikrometerwerk zum vorzugsweise vertikalen Bewegen der Objekthalteeinrichtung, einem Gestell zur Aufnahme des Mikrometerwerks und ggf. des Antriebs, einem Gehäuse und einer gegenüber der Objekthalteeinrichtung außerhalb des Gehäuses angeordneten, eine Messer tragenden Messerhalteeinrichtung, wobei zum manuellen Antrieb ein drehbares Betätigungsorgan vorgesehen ist.

Mikrotome unterschiedlichster Bauart sind hinlänglich aus dem druckschriftlichen Stand der Technik bekannt. Lediglich beispielhaft seit dazu auf die DE 43 39 071 A1 und auf die DE 102 44 687 A1 verwiesen.

Bei dem aus der DE 102 44 687 A1 bekannten Rotationsmikrotom ist seitlich am Gehäuse ein Handrad mit exzentrisch am Handrad angeordneter Kurbel als Betätigungsorgan vorgesehen, wodurch sich das Mikrometerwerk - manuell - antreiben lässt. Würde man das bekannte Rotationsmikrotom mit einem elektrischen Antrieb ausstatten, so würde das Betätigungsorgan, d. h. das Handrad und v. a. die Kurbel, zwangsweise mitdrehen. Dies ist jedoch in der Praxis problematisch, da auf Grund der rotierenden Bewegung der exzentrisch angeordneten Kurbel Verletzungsgefahr besteht.

Aus dem Stand der Technik ist bereits bekannt, die Kurbel in eine mittige Position des Handrads, d. h. in die Drehachse hinein, zu verlagern, damit eine exzentrische Bewegung der Kurbel keine Verletzungsgefahr mit sich bringt. Weitere aus der Praxis bekannte Alternativen sind einklappbare oder versenkbare Kurbeln, so dass diese den Anwender nicht oder allenfalls unwesentlich behindern.

US 5 881 626 offenbart ein Rotationsmikrotom mit einer Blockiereinrichtung, wobei ein Widerlage aufgrund von Friktion an eine Schwungmasse, die mit einem Handrad wirkverbunden ist, drükt. EP 2 141 478 offenbart ein Rotationsmikrotom mit einer Blockiereinrichtung, wobei ein Arretierstab in eine Angriffsöffnung der Kurbelwelle eines Handrades eingesteckt werden kann. DE 10 2007 026843 und DE 10 2007 026844 offenbaren ein Rotationsmikrotom mit einer Blockiereinrichtung, wobei ein Arretierhebel an dem Handrad vorgesehen ist, und in eine Aussparung am Mikrotom formschlüssig eingreift.

Die aus der Praxis bekannten Rotationsmikrotome und die dort realisierten Mechanismen zum "Entschärfen" der Kurbel sind jedoch in der Praxis unzureichend, da von ihnen immer noch eine nicht unerhebliche Behinderung und sogar Verletzungsgefahr ausgeht. Außerdem sind die dort vorgeschlagenen Lösungen konstruktiv aufwändig und daher kostenintensiv.

Der vorliegenden Erfindung liegt daher die Aufgabe zu Grunde, ein Rotationsmikrotom, welches sich sowohl zum Handbetrieb als auch zum elektrischen/elektronischen Betrieb eignet, derart auszugestalten und weiterzubilden, dass bei einfachster Konstruktion das Betätigungsorgan nicht stört, jedenfalls keine Verletzungsgefahr in sich birgt.

Voranstehende Aufgabe ist durch die Merkmale des Patentanspruchs 1 gelöst. Danach ist das gattungsbildende Rotationsmikrotom auf verblüffend einfache Weise dadurch ausgebildet, dass eine Blockiereinrichtung vorgesehen ist, die die Drehbewegung des Betätigungsorgans über ein Schiebeelement blockiert.

Erfindungsgemäß ist erkannt worden, dass die am Handrad exzentrisch angeordnete Kurbel beim eigentlichen Stillstand des Handrads, beispielsweise dann, wenn der Anwender an der Objekthalteeinrichtung eine Tätigkeit ausübt, oder beim elektrischen Betrieb des Rotationsmikrotoms, dann jedenfalls nicht bzw. nicht mehr stört, wenn auf die Kurbel bzw. das Handrad eine ganz besondere Blockiereinrichtung wirkt, die die Drehbewegung des Betätigungsorgans, zumindest die exzentrische Kreisbewegung der Kurbel, vollständig blockiert. In diesem Falle steht das Handrad und die dort exzentrisch angeordnete Kurbel fest, so dass eine Behinderung oder gar Verletzungsgefahr von der Kurbel nicht mehr ausgehen kann. In ganz besonders raffinierter Weise ist dazu ein Schiebeelement vorgesehen, welches vorzugsweise horizontal in oder nahe an der Gehäusewandung verschiebbar angeordnet ist und über die Verschiebebewegung die Blockierung über einen besonderen Mechanismus hervorruft.

Wie bereits zuvor erwähnt, umfasst das Betätigungsorgan in vorteilhafter Weise ein zum manuellen Antrieb drehbares Handrad, welches in weiter vorteilhafter Weise eine dort exzentrisch angeordnete Kurbel umfasst. Die Kurbel ist um ihre eigene Achse am Handrad drehbar, so dass beim Festhalten der Kurbel das Handrad drehbar ist, nämlich in der manuellen Betriebsart des Rotationsmikrotoms. Soll das Mikrotom - beispielsweise bei Arbeiten an der Objekthalteeinrichtung - nicht manuell betätigt werden oder beispielsweise elektrisch/elektronisch bzw. automatisch angetrieben werden, lässt sich das Handrad mit der dort exzentrisch angeordneten Kurbel feststellen, nämlich über die erfindungsgemäß vorgesehene Blockiereinrichtung. Eine Behinderung durch die Kurbel oder die Gefahr einer Verletzung auf Grund der ansonsten auf einer Kreisbahn verlaufenden Bewegung der Kurbel ist somit ausgeschlossen.

Damit es möglich ist, das Betätigungsorgan bzw. die Kurbel in eine nicht störende Position zu verbringen, ist es von weiterem Vorteil, wenn das Betätigungsorgan in jeder beliebigen Winkelposition relativ zum Gehäuse arretierbar ist, nämlich entlang einer 360°-Drehung.

Im Rahmen einer besonders raffinierten Ausgestaltung ist von Vorteil, wenn die Blockiereinrichtung automatisch aktivierbar ist, nämlich dann, wenn der Antrieb von manuell auf elektrisch geschaltet wird und umgekehrt deaktivierbar. So ist es beispielsweise möglich, einen Umschalter von manuell auf elektrisch derart auszulegen, dass er gleichzeitig die Blockiereinrichtung aktiviert, nämlich beim Umschalten auf einen elektrischen Betrieb. Wird dagegen wieder vom elektrischen Betrieb auf einen manuellen Betrieb zurückgeschaltet, kann automatisch die Blockiereinrichtung deaktiviert und somit die Drehbewegung des Betätigungsorgans freigegeben werden. Eine elektrische Betätigung der Blockiereinrichtung ist dabei denkbar.

Im Falle eines zumindest wahlweise elektrischen/elektronischen Antriebs kann es weiter von Vorteil sein, wenn die Betätigung bzw. Klemmung der Blockiereinrichtung überwacht wird. In diesem Falle könnte ein Umschalten von einem manuellen auf einen elektrischen Antrieb nur dann möglich sein, wenn die Aktivierung der Blockiereinrichtung - durch entsprechende Detektion - festgestellt wird. Ein weiterer Sicherheitsfaktor ist durch diese Maßnahme geschaffen.

Im Konkreten umfasst die Blockiereinrichtung ein vorzugsweise horizontal verschiebbares Verschiebeelement. Genauer gesagt kann durch horizontales Verschieben eines Riegels über eine schiefe Ebene hinweg ein Lagerpuffer über ein Kugellager eine Langwelle sowie eine weitere Welle vertikal verschieben. Eine am Lagerpuffer vorgesehene Gummierung könnte dann an das Handrad drücken und dieses blockieren.

Wesentlich ist jedenfalls, dass das Verschiebeelement bei Bestätigung ein Widerlager an ein drehbares Teil des Betätigungsorgans drückt und dabei das Betätigungsorgan in Bezug auf die Drehbewegung blockiert. Auf einfache Weise und durch eine einfache Konstruktion ist eine Blockierung des Betätigungsorgans sichergestellt, wenn das Rotationsmikrotom elektrisch betrieben werden soll. Dabei ist wesentlich, dass zwischen dem Mikrometerwerk und dem Betätigungsorgan eine Entkopplung stattfindet.

Wie bereits zuvor erwähnt, umfasst das Widerlager einen Gummipuffer o. ä., so dass auf Grund von Friktion eine Blockierung des Betätigungsorgans stattfindet.

Auch wenn das Betätigungsorgan, insbesondere die exzentrisch am Handrad angeordnete Kurbel, beim Arbeiten an dem Miktrotom durch den Anwender oder beim elektrischen Betrieb des Rotationsmikrotoms auf Grund einer wirkungsvollen Blockiereinrichtung nicht mehr drehen kann, könnte die bloße Vorkehrung der Kurbel dann jedenfalls stören, wenn man sie zur Betätigung bzw. zum Antrieb des Mikrometerwerks nicht benötigt. Insoweit ist es von weiteren Vorteil, wenn die Kurbel durch Betätigung eines Lösemechanismus abnehmbar ist. Insoweit sei angemerkt, dass es sich hierbei auch um eine alternative Maßnahme zur Vorkehrung der Blockiereinrichtung insoweit handeln kann, als nach Lösen der Kurbel es nicht unbedingt erforderlich ist, die Drehbewegung des Betätigungsorgans zu unterbinden, nämlich in Ermangelung eines vom Gehäuse abragenden, exzentrisch umlaufenden Teils des Betätigungsorgans.

Der Lösemechanismus kann ähnlich wie die zuvor erörterte Blockiereinrichtung automatisch aktivierbar sein, nämlich dann, wenn der Antrieb von manuell auf elektrisch geschaltet wird und umgekehrt. Auch ist es denkbar, dass das vom Gehäuse abragende, exzentrisch umlaufende Teil des Betätigungsorgans, nämlich beispielsweise die Kurbel oder dgl., beim Umschalten von manuellem auf elektrischen Betrieb automatisch ausgeworfen wird, so dass eine Art Zwangsentkopplung stattfindet.

Auch ist es denkbar, dass bei wahlweise manuellem oder elektrischem Betrieb eine weitere Vorkehrung vorgesehen ist, wonach nämlich die Entkopplung zumindest eines Teils des Betätigungsorgans, beispielsweise der Kupplung, überwacht wird. Ein Umschalten auf elektronischen Antrieb könnte im Rahmen einer solchen Ausgestaltung nur dann möglich sein, wenn zumindest die Kurbel entkoppelt bzw. entfernt ist. Auch hier ist ein weiterer Beitrag zur Sicherheit geschaffen.

Sicherheitshalber kann die Blockiereinrichtung - durchaus auch gleichzeitig - wirken, so dass bei aufgeworfener Kurbel noch nicht einmal das Handrad mehr dreht.

Im Konkreten kann der Lösemechanismus einen Druckknopf umfassen, durch dessen Betätigung über eine Welle eine Wirkverbindung beispielsweise zwischen der Kurbel und dem Handrad lösbar ist. Ein einfaches Entfernen der Kurbel ist somit bei einfachster mechanischer Konstruktion möglich.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Ansicht ein Ausführungsbeispiel eines erfindungsgemäßen Rotationsmikrotoms mit manueller Betätigungseinrichtung, umfassend ein sogenanntes Handrad mit exzentrischer Kurbel,
- Fig. 2a, 2b und 2c: in schematischen Ansichten ein Ausführungsbeispiel einer Blockiereinrichtung zum Unterbinden der Drehbewegung des Handrads, und
- Fig. 3a und 3b: in schematischen Ansichten ein Ausführungsbeispiel eines Lösemechanismus zum Entfernen einer exzentrisch am Handrad angeordneten Kurbel.

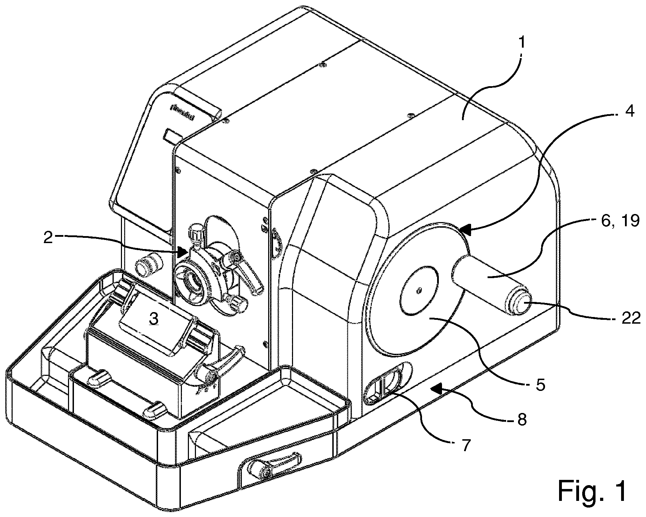

Fig. 1 zeigt ein Ausführungsbeispiel eines erfindungsgemäßen Rotationsmikrotoms, wobei dort das Mikrometerwerk im Inneren eines Gehäuses 1 angeordnet ist. Erkennbar ist die Objekthalteeinrichtung 2, die zum Halten einer zu schneidenden Probe dient.

Es ist ein Antrieb für das Mikrometerwerk vorgesehen, nämlich zur mehr oder weniger vertikalen Bewegen der Objekthalteeinrichtung 2. Ein Gestell bzw. ein Rahmen dient zur Aufnahme des Mikrometerwerks und gegebenenfalls des Antriebs, wobei das Gestell integraler Bestandteil des Gehäuses 1 sein kann.

Außerdem zeigt Fig. 1 deutlich die Anordnung einer Objekthalteeinrichtung 2 und einer üblicherweise ein Messer tragenden Messerhalteeinrichtung 3, wobei die Objekthalteeinrichtung 2 bzw. das dort gehaltene Objekt oder die Probe an dem von der Messerhalteeinrichtung 3 gehaltenen Messer unter Realisierung einer Zustellbewegung vorbeibewegt wird, so dass ein einstellbarer feiner Schnitt zum Herstellen dünner Proben möglich ist.

Der Antrieb erfolgt wahlweise über ein drehbares Betätigungsorgan 4, welches bei dem hier gezeigten Ausführungsbeispiel ein Handrad 5 und eine exzentrische Kurbel 6 umfasst.

Wie zuvor bereits ausgeführt, handelt es sich hier um ein Rotationsmikrotom, welches wahlweise manuell oder elektrisch, d. h. über einen entsprechenden Elektromotor, antreibbar ist. Dies bedeutet, dass das Mikrometerwerk zum vertikalen Bewegen der Objekthalteeinrichtung manuell über das Betätigungsorgan 4 oder elektrisch über den in Fig. 1 nicht erkennbaren elektrischen Motor betätigt wird.

In erfindungsgemäßer Weise ist eine in Fig. 1 durch einen Schiebeschalter 7 angedeutete Blockiereinrichtung 8 vorgesehen, die die Drehbewegung des Betätigungsorgans 4 bzw. die Drehbewegung des Handrads 5 und somit die Kreisbahnbewegung der Kurbel 6 blockiert, nämlich dann, wenn das Rotationsmikrotom elektrisch betrieben werden soll. Eine für die Bedienungsperson gefährliche Kreisbahnbewegung der Kurbel 6 ist somit ausgeschlossen.

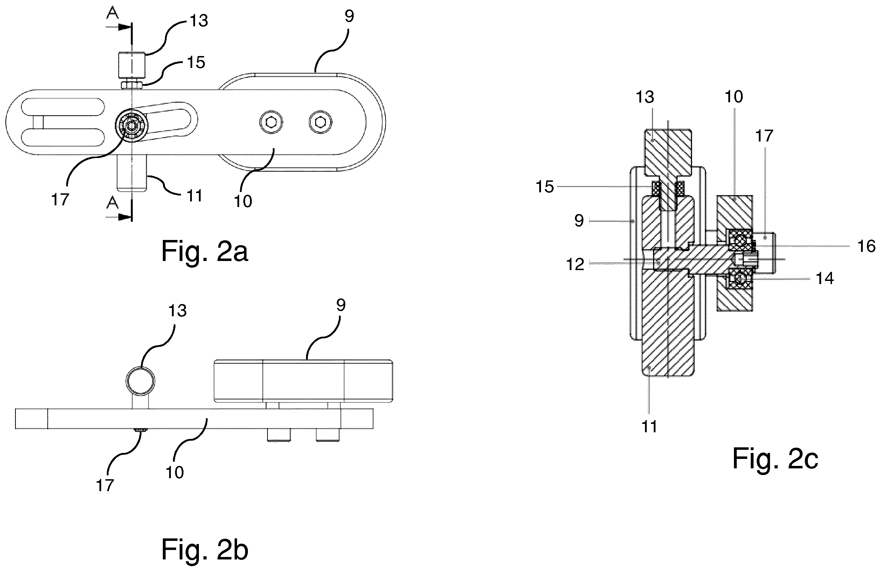

Die Fig. 2a, 2b und 2c zeigen die Blockiereinrichtung 8 im Detail, wobei in den Figuren als wesentliche Bestandteile der Blockiereinrichtung 8 eine Griffschale 9, ein Riegel 10, eine Welle 11, eine Lagerwelle 12, ein Lagerpuffer 13, ein weiteres Lager 14, eine Mutter 15, ein Sicherungsring 16 und eine Schraube 17 erkennbar sind.

Durch horizontales Verschieben des Riegels 10 wird über eine schiefe Ebene der Lagerpuffer 13 über das Lager 14, die Lagerwelle 12 und die Welle 11 vertikal verschoben. Die Gummierung des Lagerpuffers 13 drückt nach dieser Verschiebung an das Handrad 5 und fixiert dieses, so dass ein weiteres Drehen des Handrads 5 nicht mehr möglich ist.

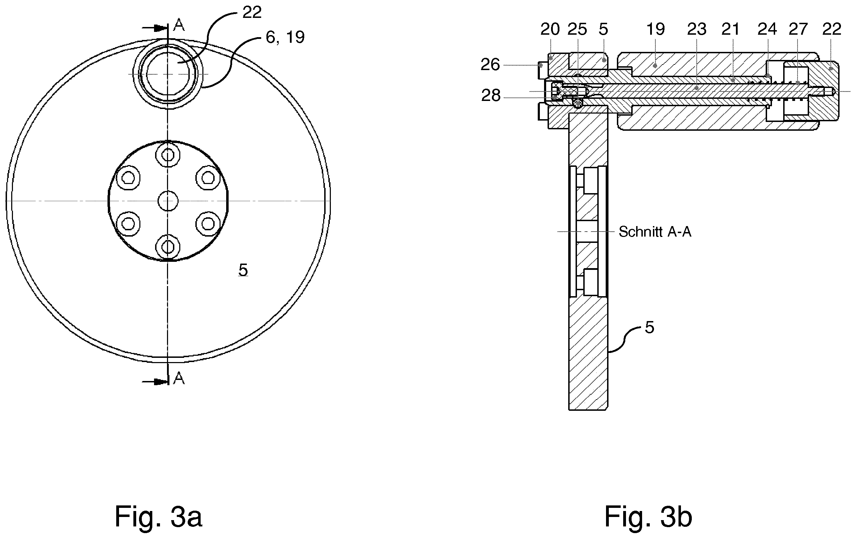

Die Fig. 3a und 3b zeigen in zwei Ansichten die Vorkehrung eines Lösemechanismus 18, durch den ein Teil des Betätigungsorgans 4, nämlich die Kurbel 6, vom Handrad 5 entfernbar ist.

Genauer gesagt zeigen die Fig. 3a und 3b das Handrad 5, eine Griffschale 19, eine Kurbelaufnahme 20, eine Lagerwelle 21, einen Druckknopf 22, eine Welle 23, einen Sicherungsring 24, eine Kugel 25, eine Schraube 26, eine Druckfeder 27 und eine Schraube 28.

Durch Betätigen des Druckknopfes 22 lässt sich die Welle 23 axial verschieben. Die Kugeln 25 können dann auf Grund des durch die Verschiebung entstandenen Hohlraums nach innen ausweichen und der Griff bzw. die Kurbel 6 kann aus der Kurbelaufnahme 20 mühelos herausgezogen werden, so dass vom Handrad 5 kein störendes Bauteil mehr abragt. Eine etwaige Drehbewegung des Handrads 5 spielt dann keine Rolle mehr, bedeutet jedenfalls keine weitere Verletzungsgefahr für die Bedienperson, auch dann nicht, wenn das Handrad bei elektrischem Antrieb dreht, nämlich in Ermangelung einer entsprechenden Blockiereinrichtung.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Patentansprüche verwiesen.

Schließlich sei ausdrücklich darauf hingewiesen, dass das voranstehend beschriebene Ausführungsbeispiel der erfindungsgemäßen Vorrichtung lediglich zur Erörterung der beanspruchten Lehre dient, diese jedoch nicht auf das Ausführungsbeispiel einschränkt.

### Bezugszeichenliste

- 1: Gehäuse
- 2: Objekthalteeinrichtung
- 3: Messerhalteeinrichtung
- 4: Betätigungsorgan
- 5: Handrad, drehbares Teil
- 6: Kurbel
- 7: Schiebeschalter
- 8: Blockiereinrichtung
- 9: Griffschale
- 10: Riegel, Schiebeelement
- 11: Welle
- 12: Lagerwelle
- 13: Lagerpuffer, Widerlager
- 14: Lager
- 15: Mutter
- 16: Sicherungsring
- 17: Schraube
- 18: Lösemechanismus
- 19: Griffschale
- 20: Kurbelaufnahme
- 21: Lagerwelle
- 22: Druckknopf
- 23: Welle
- 24: Sicherungsring
- 25: Kugel
- 26: Schraube
- 27: Druckfeder
- 28: Schraube

## Patentansprüche

1. Rotationsmikrotom mit einem Mikrometerwerk, einer dem Mikrometerwerk zugeordneten Objekthalteeinrichtung (2), einem Antrieb für das Mikrometerwerk zum vorzugsweise vertikalen Bewegen der Objekthalteeinrichtung (2), einem Gestell zur Aufnahme des Mikrometerwerks und ggf. des Antriebs, einem Gehäuse (1) und einer gegenüber der Objekthalteeinrichtung (2) außerhalb des Gehäuses (1) angeordneten, ein Messer tragenden Messerhalteeinrichtung (3), wobei zum manuellen Antrieb ein drehbares Betätigungsorgan (4) mit einem Handrad (5) vorgesehen ist und wobei eine Blockiereinrichtung (8) vorgesehen ist, die die Drehbewegung des Betätigungsorgans (4) über ein Schiebeelement (10) vollständig blockiert,
**dadurch gekennzeichnet, dass** das Schiebeelement (10) in oder nahe an der Gehäusewandung, vorzugsweise horizontal, verschiebbar ist und bei Betätigung ein Widerlager (13) an das Handrad (5) drückt und dabei aufgrund von Friktion dessen Drehbewegung blockiert und dass das Widerlager einen Lagerpuffer (13) oder dergleichen umfasst.

2. Rotationsmikrotom nach Anspruch 1, **dadurch gekennzeichnet, dass** das Betätigungsorgan (4) eine Kurbel (6) umfasst.

3. Rotationsmikrotom nach Anspruch 1 oder 2, **dadurch gekennzeichnet, dass** das Betätigungsorgan (4) in jeder beliebigen Winkelposition relativ zum Gehäuse (1) arretierbar ist.

4. Rotationsmikrotom nach einem der Ansprüche 1 bis 3, wobei der Antrieb wahlweise manuell über das Betätigungsorgan (4) oder elektrisch über einen elektrischen Antriebsmotor erfolgt, **dadurch gekennzeichnet, dass** die Blockiereinrichtung (8) automatisch aktivierbar ist, wenn der Antrieb von manuell auf elektrisch geschaltet wird und umgekehrt.

5. Rotationsmikrotom nach einem der Ansprüche 1 bis 3, wobei der Antrieb wahlweise manuell über das Betätigungsorgan (4) oder elektrisch über einen elektrischen Antriebsmotor erfolgt, **dadurch gekennzeichnet, dass** die Betätigung bzw. Klemmung der Blockiereinrichtung (8) überwacht wird und dass ein Umschalten auf elektrischen Antrieb nur dann möglich ist, wenn die Aktivierung der Blockiereinrichtung feststellbar bzw. detektierbar ist.

6. Rotationsmikrotom nach einem der Ansprüche 1 bis 5, **dadurch gekennzeichnet, dass** zumindest ein vom Gehäuse (1) abragendes, exzentrisch umlaufendes Teil des Betätigungsorgans (4), beispielsweise eine Kurbel (6) oder dgl., durch Betätigen eines Lösemechanismus (18) abnehmbar ist.

7. Rotationsmikrotom nach Anspruch 6, wobei der Antrieb wahlweise manuell über das Betätigungsorgan (4) oder elektrisch über einen elektrischen Antriebsmotor erfolgt, **dadurch gekennzeichnet, dass** der Lösemechanismus (18) automatisch aktivierbar ist, wenn der Antrieb von manuell auf elektrisch geschaltet wird und umgekehrt.

8. Rotationsmikrotom nach Anspruch 6 oder 7, wobei der Antrieb wahlweise manuell über das Betätigungsorgan (4) oder elektrisch über einen elektrischen Antriebsmotor erfolgt, **dadurch gekennzeichnet, dass** die Entkopplung bzw. das Entfernen eines vom Gehäuse abragenden, exzentrisch umlaufenden Teils des Betätigungsorgans, beispielsweise der Kurbel oder dgl., überwacht wird und dass ein Umschalten auf elektrischen Antrieb nur dann möglich ist, wenn die Entkopplung bzw. das Entfernen des abragenden Teils bzw. der Kurbel feststellbar bzw. detektierbar ist.

9. Rotationsmikrotom nach einem der Ansprüche 6 bis 8, **dadurch gekennzeichnet, dass** der Lösemechanismus (18) einen Druckknopf (22) umfasst, durch dessen Betätigung über eine Welle eine Wirkverbindung zwischen einer Kurbel (6) und einem Handrad (5) lösbar ist.

## Claims

1. Rotary microtome having a micrometer mechanism, an object retention device (2) which is associated with the micrometer mechanism, a drive for the micrometer mechanism for preferably vertically moving the object retention device (2), a frame for receiving the micrometer mechanism and where applicable the drive, a housing (1) and a blade retention device (3) which is arranged opposite the object retention device (2) outside the housing (1) and which carries a blade, wherein for manual driving a rotatable actuation member (4) having a hand wheel (5) is provided, and wherein there is provided a blocking device (8) which completely blocks the rotational movement of the actuation member (4) via a sliding element (10),
**characterised in that** the sliding element (10) can be displaced in or close to the housing wall, preferably horizontally, and when actuated an abutment (13) presses on the hand wheel (5) and blocks the rotational movement thereof as a result of friction, and **in that** the abutment comprises a bearing buffer (13) or the like.

2. Rotary microtome according to claim 1, **characterised in that** the actuation member (4) comprises a crank (6).

3. Rotary microtome according to claim 1 or 2, **characterised in that** the actuation member (4) can be locked in any angular position relative to the housing (1).

4. Rotary microtome according to any one of claims 1 to 3, wherein the driving is carried out either manually via the actuation member (4) or electrically via an electric drive motor, **characterised in that** the blocking device (8) can be automatically activated when the drive is switched from manual to electric and vice versa.

5. Rotary microtome according to any one of claims 1 to 3, wherein the driving is carried out either manually via the actuation member (4) or electrically via an electric drive motor, **characterised in that** the actuation or clamping of the blocking device (8) is monitored and **in that** switching to electric driving is possible only when the activation of the blocking device can be determined or detected.

6. Rotary microtome according to any one of claims 1 to 5, **characterised in that** at least a portion of the actuation member (4) which protrudes from the housing (1) and which rotates eccentrically, for example, a crank (6) or the like, can be removed by actuating a release mechanism (18).

7. Rotary microtome according to claim 6, wherein the driving is carried out either manually via the actuation member (4) or electrically via an electric drive motor, **characterised in that** the release mechanism (18) can be automatically activated when the drive is switched from manual to electric and vice versa.

8. Rotary microtome according to claim 6 or claim 7, wherein the driving is carried out either manually via the actuation member (4) or electrically via an electric drive motor, **characterised in that** the decoupling or the removal of a portion of the actuation member which protrudes from the housing and which rotates eccentrically, for example, the crank or the like, is monitored, and **in that** switching to electric driving is possible only when the decoupling or the removal of the protruding portion or the crank can be determined or detected.

9. Rotary microtome according to any one of claims 6 to 8, **characterised in that** the release mechanism (18) comprises a push-button (22), by means of the actuation of which via a shaft an operational connection between a crank (6) and a hand wheel (5) can be released.

## Revendications

1. Microtome rotatif avec un mécanisme micrométrique, un dispositif de maintien d'objet (2) correspondant au mécanisme micrométrique, un entraînement pour le mécanisme micrométrique pour le déplacement de préférence vertical du dispositif de maintien d'objet (2), un châssis pour le logement du mécanisme micrométrique et le cas échéant de l'entraînement, un boîtier (1) et un dispositif de maintien de lame (3), disposé en face du dispositif de maintien d'objet (2) à l'extérieur du boîtier (1), comportant une lame, moyennant quoi, pour l'entraînement manuel, un organe d'actionnement rotatif (4) avec un volant (5) est prévu, et un dispositif de blocage (8) est prévu qui bloque complètement le mouvement de rotation de l'organe d'actionnement (4) par l'intermédiaire d'un élément coulissant (10),
**caractérisé en ce que** l'élément coulissant (10) coulisse dans ou à proximité de la paroi du boîtier, de préférence horizontalement et, lors de l'actionnement, un contre-palier (13) s'appuie contre le volant (5) et bloque ainsi son mouvement de rotation par friction, et **en ce que** le contre-palier comprend un tampon de palier (13) ou autre.

2. Microtome rotatif selon la revendication 1, **caractérisé en ce que** l'organe d'actionnement (4) comprend une manivelle (6).

3. Microtome rotatif selon la revendication 1 ou 2, **caractérisé en ce que** l'organe d'actionnement (4) peut être bloqué dans une position angulaire quelconque par rapport au boîtier (1).

4. Microtome rotatif selon l'une des revendications 1 à 3, l'entraînement ayant lieu au choix manuellement par l'intermédiaire de l'organe d'actionnement (4) ou électriquement par l'intermédiaire d'un moteur d'entraînement électrique, **caractérisé en ce que** le dispositif de blocage (8) peut être activé automatiquement lorsque l'entraînement est commuté de manuel à électrique et inversement.

5. Microtome rotatif selon l'une des revendications 1 à 3, l'entraînement ayant lieu au choix manuellement par l'intermédiaire de l'organe d'actionnement (4) ou électriquement par l'intermédiaire d'un moteur d'entraînement électrique, **caractérisé en ce que** l'actionnement ou le serrage du dispositif de blocage (8) est surveillé et **en ce qu'**un passage à l'entraînement électrique n'est possible que lorsque l'activation du dispositif de blocage peut être constatée ou détectée.

6. Microtome rotatif selon l'une des revendications 1 à 5, **caractérisé en ce qu'**au moins une partie de l'organe d'actionnement (4) dépassant du boîtier (1) et de forme circulaire excentrique, par exemple une manivelle (6) ou autre peut être retirée par l'actionnement d'un mécanisme de détachement (18).

7. Microtome rotatif selon la revendication 6, l'entraînement ayant lieu au choix manuellement par l'intermédiaire de l'organe d'actionnement (4) ou électriquement par l'intermédiaire d'un moteur d'entraînement électrique, **caractérisé en ce que** le mécanisme de détachement (18) peut être activé automatiquement lorsque l'entraînement est commuté de manuel à électrique et inversement.

8. Microtome rotatif selon la revendication 6 ou 7, l'entraînement ayant lieu au choix manuellement par l'intermédiaire de l'organe d'actionnement (4) ou électriquement par l'intermédiaire d'un moteur d'entraînement électrique, **caractérisé en ce que** le découplage ou le retrait d'une partie de l'organe d'actionnement circulaire excentrique dépassant du boîtier, par exemple la manivelle ou autre, est surveillé et **en ce qu'**une commutation vers l'entraînement électrique n'est possible que lorsque le découplage ou le retrait de la partie dépassante ou de la manivelle peut être constatée ou détectée.

9. Microtome rotatif selon l'une des revendications 6 à 8, **caractérisé en ce que** le mécanisme de détachement (18) comprend un bouton poussoir (22) dont l'actionnement par l'intermédiaire d'un arbre permet le détachement d'une liaison fonctionnelle entre une manivelle (6) et un volant (5).
